# EUROPÄISCHE PATENTANMELDUNG

(11) **EP 3 141 929 A1**
(43) Veröffentlichungstag der Anmeldung: **15.03.2017**
(21) Anmeldenummer: 16187656.0
(22) Anmeldetag: 07.09.2016
(51) Int. Cl.: G01S 15/93, G01S 7/521, B60S 1/66, B60R 19/48, G10K 11/00, G01S 15/87, G01S 7/52, B60S 1/48

(54) **ULTRASCHALLSENSOR FÜR EIN KRAFTFAHRZEUG, FAHRERASSISTENZSYSTEM SOWIE KRAFTFAHRZEUG**

(30) Priorität: 14.09.2015 DE 102015115419
(71) Anmelder: Valeo Schalter und Sensoren GmbH, 74321 Bietigheim-Bissingen (DE)
(72) Erfinder: Thunert, Fabian, 74321 Bietigheim-Bissingen (DE)

(57) **Zusammenfassung**

Die Erfindung betrifft einen Ultraschallsensor (5) für ein Kraftfahrzeug (1) mit einer Membran (10) aufweisend einen Membranboden (11) und eine Membranmantelwand (12), wobei der Membranboden (10) eine in eine Ultraschallsignale aussendende Senderichtung (14) des Ultraschallsensors (5) weisende Vorderseite (16) und eine der Vorderseite (16) gegenüberliegende Rückseite (17) aufweist, wobei der Ultraschallsensor (5) eine Reinigungseinrichtung (9) zum Reinigen der Vorderseite (16) des Membranbodens (11) aufweist. Die Erfindung betrifft außerdem ein Fahrerassistenzsystem (2) sowie ein Kraftfahrzeug (1).

## Beschreibung

Die Erfindung betrifft einen Ultraschallsensor für ein Kraftfahrzeug mit einer Membran aufweisend einen Membranboden und eine Membranmantelwand, wobei der Membranboden eine in ein Ultraschallsignal aussendende Senderichtung des Ultraschallsensors weisende Vorderseite und eine der Vorderseite gegenüberliegende Rückseite aufweist. Die Erfindung betrifft außerdem ein Fahrerassistenzsystem mit einem Ultraschallsensor sowie ein Kraftfahrzeug mit einem Fahrerassistenzsystem.

Es ist bereits aus dem Stand der Technik bekannt, Ultraschallsensoren an Kraftfahrzeugen anzuordnen, um einen Umgebungsbereich der Kraftfahrzeuge zu überwachen. Dazu wird von den Ultraschallsensoren ein Ultraschallsignal ausgesendet und das an einem Objekt in dem Umgebungsbereich reflektierte Ultraschallsignal wieder empfangen. Informationen über das erfasste Objekt, beispielsweise ein Abstand des Objekts zu dem Kraftfahrzeug, können dabei einem Fahrerassistenzsystem des Kraftfahrzeugs, beispielsweise einem Parkassistenzsystem, bereitgestellt werden.

Zur Erzeugung des Ultraschallsignals weisen die Ultraschallwandler in der Regel eine schwingungsfähige Membran auf, wobei im eingebauten Zustand des Ultraschallsensors am Kraftfahrzeug, beispielsweise in einem Außenverkleidungsteil des Kraftfahrzeugs, eine Vorderseite der Membran dem Umgebungsbereich des Kraftfahrzeugs zugewandt ist. Wenn sich dabei ein Verschmutzungsbelag, beispielsweise eine Eisschicht oder eine Schmutzschicht, auf dem Ultraschallsensor, beispielsweise auf der Vorderseite der Membran, ablagert, kann dies eine Funktionstüchtigkeit des Ultraschallsensors negativ beeinflussen, indem beispielsweise das Senden und/oder Empfangen der Ultraschallsignale eingeschränkt oder gar blockiert wird. Die EP 2 618 177 A1 beschreibt ein Verfahren zum Erkennen eines vereisten und/oder verschmutzten Zustands von Ultraschallsensoren.

Es ist Aufgabe der vorliegenden Erfindung, einen besonders zuverlässigen und funktionstüchtigen Ultraschallsensor zu gestalten.

Diese Aufgabe wird erfindungsgemäß durch einen Ultraschallsensor, ein Fahrerassistenzsystem sowie ein Kraftfahrzeug mit den Merkmalen gemäß den unabhängigen Patentansprüchen gelöst.

Ein erfindungsgemäßer Ultraschallsensor für ein Kraftfahrzeug weist eine Membran auf, welche einen Membranboden und eine Membranmantelwand umfasst. Dabei weist der Membranboden eine, in eine Ultraschallsignale aussendende Senderichtung des Ultraschallsensors weisende Vorderseite und eine der Vorderseite gegenüberliegende Rückseite auf. Darüber hinaus weist der Ultraschallsensor eine Reinigungseinrichtung zum Reinigen der Vorderseite des Membranbodens auf.

Der Ultraschallsensor ist insbesondere dazu ausgelegt, einen Umgebungsbereich des Kraftfahrzeugs zu erfassen. Dabei werden über den Membranboden Ultraschallwellen ausgesendet und die an einem Objekt in dem Umgebungsbereich reflektierten Ultraschallsignale empfangen. Die Membran kann dabei beispielsweise als eine topfförmige Membran ausgestaltet sein. Die topfförmige Membran kann beispielsweise einen runden oder ovalen Membranboden aufweisen, welcher einen kreisförmigen oder ovalförmigen Seitenrand aufweist. Die Membranmantelwand ist insbesondere um eine Längsachse des Ultraschallsensors entlang des Seitenrandes des Membranbodens angeordnet. Die Membranmantelwand kann angrenzend an den Seitenrand des Membranbodens angeordnet sein und sich senkrecht zu der Rückseite des Membranbodens entlang der Längsachse erstrecken. Die topfförmige Membran kann einteilig ausgebildet sein. An der Rückseite des Membranbodens kann ein Wandlerelement, beispielsweise ein Piezoelement, angeordnet sein, welches zur Schwingungsanregung des Membranbodens ausgebildet ist.

In einem eingebauten Zustand des Ultraschallsensors, beispielsweise in einem als Stoßfänger ausgebildeten Außenverkleidungsteil des Kraftfahrzeugs, ist die Vorderseite des Membranbodens insbesondere direkt an den Umgebungsbereich des Kraftfahrzeugs angrenzend ausgebildet. Dabei kann es beispielsweise vorkommen, dass sich ein Verschmutzungsbelag, beispielsweise Schmutz, Eis oder Schnee, auf der Vorderseite des Membranbodens des Ultraschallsensors ablagert, sodass ein Empfangen und/oder Aussenden der Ultraschallsignale eingeschränkt oder verhindert wird.

Um den Verschmutzungsbelag auf der Vorderseite des Membranbodens des Ultraschallsensors zu entfernen, weist der Ultraschallsensor die Reinigungseinrichtung beziehungsweise eine Waschdüse auf, welche insbesondere in den Ultraschallsensor integriert ist. Die Reinigungseinrichtung ist dazu ausgelegt, die Vorderseite des Membranbodens zu reinigen beziehungsweise zu säubern.

Durch diese integrierte Reinigungseinrichtung kann in vorteilhafter Weise der Ultraschallsensor jederzeit von einem Verschmutzungsbelag befreit werden und somit ein störungsfreies Senden und/oder Empfangen von Ultraschallsignalen ermöglicht werden. Der Ultraschallsensor ist somit besonders zuverlässig gestaltet.

Vorzugsweise weist der Ultraschallsensor eine Gehäuseeinrichtung zum Aufnehmen der Membran auf, wobei die Reinigungseinrichtung zumindest bereichsweise innerhalb der Gehäuseeinrichtung angeordnet ist. Die Gehäuseeinrichtung beziehungsweise das Gehäuse kann beispielsweise ein Kunststoffgehäuse sein, innerhalb welchem die Membran zumindest teilweise angeordnet ist. Die Membran ist also zumindest teilweise in einem Gehäuseinneren beziehungsweise einem Innenraum der Gehäuseeinrichtung oder einem gegenüber dem Umgebungsbereich des Kraftfahrzeugs abgegrenzten Bereich der Gehäuseeinrichtung angeordnet. Die Gehäuseeinrichtung kann eine, um die Längsachse verlaufende Seitenwand aufweisen, welche sich entlang der Längsachse des Ultraschallsensors erstreckt und zumindest bereichsweise mit der Membranmantelwand überlappt. Außerdem kann die Gehäuseeinrichtung eine der Rückseite des Membranbodens gegenüberliegende Gehäuserückseite aufweisen, welche das Gehäuse rückseitig bedeckt beziehungsweise abdichtet. Zusätzlich kann die Gehäuseeinrichtung einen frontseitigen Gehäusedeckel aufweisen. Der Gehäusedeckel kann dabei beispielsweise angrenzend an den Seitenrand des Membranbodens angeordnet sein und dabei die Vorderseite des Membranbodens höchstens bereichsweise überdecken. Der Gehäusedeckel kann beispielsweise bereichsweise überlappend mit der Seitenwand der Gehäuseeinrichtung ausgebildet sein. Die Reinigungseinrichtung kann nun zumindest bereichsweise in die Gehäuseeinrichtung integriert sein, also in dem Innenraum der Gehäuseeinrichtung angeordnet sein. Somit kann die Reinigungseinrichtung beziehungsweise die Waschdüse besonders platzsparend in den Ultraschallsensor integriert werden.

Gemäß einer vorteilhaften Ausführungsform weist die Reinigungseinrichtung einen Eintrittsbereich, einen Austrittsbereich und zumindest ein Leitelement zum Leiten von Reinigungsflüssigkeit von dem Eintrittsbereich zu dem Austrittsbereich auf, wobei die Reinigungseinrichtung zumindest bereichsweise in die Gehäuseeinrichtung integriert ist. Das zumindest eine Leitelement kann beispielsweise als ein Schlauch oder als ein Kanal ausgestaltet sein, welcher innerhalb der Gehäuseeinrichtung angeordnet sein kann und mit dem Eintrittsbereich und dem Austrittsbereich gekoppelt ist. Der Eintrittsbereich und der Austrittsbereich können dabei beispielsweise als Öffnungen beziehungsweise Löcher in einer Wand der Gehäuseeinrichtung ausgebildet sein. Der Austrittsbereich kann dabei beispielsweise als eine Öffnung an einer Vorderseite des Gehäuses ausgebildet sein, sodass die Reinigungsflüssigkeit durch das beispielsweise in dem Gehäuseinneren angeordnete Leitelement hindurch zu dem Austrittsbereich fließt und über den Austrittsbereiche aus der Gehäuseeinrichtung zum Säubern der Vorderseite des Membranbodens austritt. Durch das Integrieren des zumindest einen Leitelements in die Gehäuseeinrichtung kann auf besonders einfache Weise Reinigungsflüssigkeit in das Leitelement eingeführt werden und zu dem Austrittsbereich durch die Gehäuseeinrichtung hindurch geleitet werden. Außerdem kann durch das Bereitstellen des zumindest einen Leitelementes verhindert werden, dass eine Elektronik, welche im Innenraum der Gehäuseeinrichtung angeordnet sein kann und beispielsweise zum Ansteuern des Piezoelementes dient, durch die Reinigungsflüssigkeit beschädigt wird.

Dabei kann es vorgesehen sein, dass der Eintrittsbereich als eine Öffnung in einer der Rückseite des Membranbodens zugewandten Gehäuserückseite und/oder in einem zumindest bereichsweise mit der Membranmantelwand überlappenden Bereich einer Seitenwand der Gehäuseeinrichtung ausgebildet ist. Der Eintrittsbereich kann beispielsweise als ein Loch in der Gehäuserückseite ausgestaltet sein, sodass die Reinigungsflüssigkeit im Wesentlichen in Senderichtung entlang der Längsachse des Ultraschallsensors von der Gehäuserückseite zu dem Austrittsbereich, welcher beispielsweise an der Vorderseite des Gehäuses angeordnet sein kann, und damit zu der Vorderseite des Membranbodens fließen kann. Das Leitelement kann dabei beispielsweise in einem Randbereich im Innenraum der Gehäuseeinrichtung angeordnet sein, beispielsweise entlang einer Innenseite der Seitenwand der Gehäuseeinrichtung verlaufend angeordnet sein.

Alternativ oder zusätzlich kann der Eintrittsbereich als eine Öffnung seitlich in der Gehäuseeinrichtung, also in der Seitenwand der Gehäuseeinrichtung, ausgebildet sein. Der Eintrittsbereich ist dabei in dem Bereich der Seitenwand vorgesehen, in welchem die Seitenwand der Gehäuseeinrichtung mit der Membranmantelwand überlappt. Beispielsweise kann der Eintrittsbereich in dem Gehäusedeckel angeordnet sein. Dabei kann die Reinigungsflüssigkeit beispielsweise über den Eintrittsbereich in das Leitelement, welches angrenzend an die Außenseite der Membranmantelwand angeordnet ist und sich entlang der Membranmantelwand zu dem Austrittsbereich erstreckt, geleitet werden und entlang der Außenseite der Membranmantelwand bis zu der Vorderseite des Membranbodens fließen.

Es erweist sich als vorteilhaft, wenn der Austrittsbereich angrenzend an einen, um eine Längsachse des Ultraschallsensors verlaufenden Seitenrand des Membranbodens ausgebildet ist und sich insbesondere höchstens über einen Winkel von 180°entlang des Seitenrandes erstreckt. Der Austrittsbereich kann dabei als eine spaltförmige Öffnung zwischen der Seitenwand der Gehäuseeinrichtung und dem Seitenrand des Membranbodens beziehungsweise der Membranmantelwand ausgebildet sein. Anders ausgedrückt bedeutet dies, dass Ränder des Austrittsbereiches von der Seitenwand des Gehäuses und dem Seitenrand des Membranbodens ausgebildet sein können. Das zumindest eine Leitelement ist dabei insbesondere angrenzend an die spaltförmige, den Austrittsbereich ausbildende Öffnung angeordnet, sodass die Reinigungsflüssigkeit durch das Leitelement zu der Spaltöffnung fließen kann und über den Seitenrand an der Vorderseite des Membranbodens austreten kann.

Der Austrittsbereich erstreckt sich dabei insbesondere höchstens über einen Winkel von 180°entlang des Seitenrandes, sodass der Austritts bereich in einer bestimmungsgemäßen Einbaulage des Ultraschallsensors am Kraftfahrzeug entlang einer oberen Hälfte beziehungsweise einer Oberseite des Seitenrandes des Membranbodens verläuft. Dadurch kann die Reinigungsflüssigkeit nach Austreten aus dem Austrittsbereich an der Oberseite des Seitenrandes des Membranbodens über die Vorderseite des Membranbodens nach unten, also in Richtung einer Fahrbahn des Kraftfahrzeugs, fließen. Anders ausgedrückt kann die Reinigungsflüssigkeit also an der Vorderseite des Membranbodens herab laufen und dabei den Verschmutzungsbelag von der Vorderseite des Membranbodens abtragen. Die Reinigungseinrichtung ist somit besonders einfach gestaltet.

Auch kann vorgesehen sein, dass der Ultraschallsensor ein ringförmiges, an die Membranmantelwand angrenzendes Entkopplungselement aufweist, wobei das Leitelement zumindest bereichsweise als ein Spalt zwischen dem Entkopplungselement und der Membranmantelwand ausgebildet ist und der Austrittsbereich als eine Öffnung zwischen dem Entkopplungselement und einem, um eine Längsachse des Ultraschallsensors verlaufenden Seitenrand des Membranbodens ausgebildet ist. Das Entkopplungselement kann als ein Entkopplungsring, beispielsweise als ein Gummiring, ausgebildet sein. Das Entkopplungselement kann den Ultraschallsensor in seiner bestimmungsgemäßen Einbaulage an dem Außenverkleidungsteil des Kraftfahrzeugs, beispielsweise im Stoßfänger des Kraftfahrzeugs, zentrieren und den Ultraschallsensor von dem Außenverkleidungsteil schwingungsentkoppeln. Mittels des Entkopplungselementes kann beispielsweise verhindert werden, dass sich Ultraschallsignale beziehungsweise Ultraschallwellen in dem Außenverkleidungsteil ausbreiten. Das Entkopplungselement verläuft dabei insbesondere entlang des Seitenrandes des Membranbodens und überlappt dabei zumindest bereichsweise mit der Membranmantelwand. Das Leitelement ist hier zumindest bereichsweise durch den Spalt zwischen einer der Membranmantelwand zugewandten Innenseite des Entkoppelungselementes und der Außenseite der Membranmantelwand ausgebildet. Der Austrittsbereich ist hier als die spaltförmige Öffnung zwischen dem Seitenrand und der Innenseite des Entkopplungselementes ausgebildet.

Gemäß dieser Ausführungsform kann die Reinigungsflüssigkeit beziehungsweise das Waschmedium beispielsweise seitlich direkt in den Entkopplungsring geführt und zwischen dem Entkopplungsring und der Membranmantelwand zu der Vorderseite des Membranbodens geleitet werden. Dazu kann der Eintrittsbereich beispielsweise an einer parallel zu der Rückseite des Membranbodens liegenden Rückseite des Entkopplungsringes angeordnet sein. Die Reinigungsflüssigkeit kann über den Eintrittsbereich in den Spalt zwischen dem Entkopplungsring und der Membranmantelwand eintreten, welcher sich insbesondere entlang der Membranmantelwand zu einer Vorderseite des Entkopplungsringes und damit zu der Vorderseite des Membranbodens erstreckt, und an der Membranmantelwand entlang zu dem Austrittsbereich fließen.

Die den Austrittsbereich ausbildende Öffnung ist dabei insbesondere halbkreisförmig entlang der Oberseite des Seitenrandes des Membranbodens verlaufend ausgebildet. Die Reinigungsflüssigkeit läuft also zwischen dem Entkopplungselement und der Membranmantelwand zu der Vorderseite des Membranbodens, tritt am Seitenrand des Membranbodens aus und läuft über die Vorderseite des Membranbodens. Somit kann in vorteilhafter Weise der zur Entkopplung genutzte Gummiring zusätzlich genutzt werden, um die Reinigungsflüssigkeit an die Vorderseite des Membranbodens zu leiten und dort zu verteilen.

Vorzugsweise ist das zumindest eine Leitelement einteilig mit der Gehäuseeinrichtung ausgebildet. Somit kann in vorteilhafter Weise bereits beim Fertigen des Gehäuses das zumindest eine Leitelement ausgebildet werden und somit besonders platzsparend in die Gehäuseeinrichtung integriert werden.

Es erweist sich als vorteilhaft, wenn eine entlang einer Längsachse des Ultraschallsensors verlaufende Seitenwand der Gehäuseeinrichtung zum Ausbilden des Leiterelements zumindest bereichsweise doppelwandig ausgebildet ist. Die Seitenwand weist also zwei entlang der Längsachse des Ultraschallsensors parallel verlaufende Seitenwandelemente auf, wobei zwischen den Seitenwandelementen ein Zwischenraum ausgebildet wird, welcher zumindest bereichsweise das zumindest eine Leitelement ausbildet. Die zugeführte Reinigungsflüssigkeit fließt dabei in dem Zwischenraum, also innerhalb der doppelwandigen Seitenwand, und ist dabei von dem Innenraum der Gehäuseeinrichtung, in welchem beispielsweise eine Elektronik des Ultraschallsensors angeordnet ist, getrennt beziehungsweise separiert. Damit kann die Elektronik besonders gut geschützt werden.

Insbesondere bildet ein durch die doppelwandige Seitenwand an der Gehäuserückseite ausgebildeter Ringspalt den Eintrittsbereich aus und ein durch die doppelwandige Seitenwand an der Gehäusevorderseite ausgebildeter Ringspalt den Austrittsbereich aus. Der durch den Ringspalt gebildete Austrittsbereich ist dabei insbesondere angrenzend an den Seitenrand des Membranbodens ausgebildet, sodass die Reinigungsflüssigkeit direkt am Seitenrand des Membranbodens austreten kann. Auch kann das Entkopplungselement um die Membranmantelwand verlaufend angeordnet sein, sodass das Leitelement in einem ersten Bereich durch die doppelwandige Seitenwand und in einem zweiten Bereich durch den Spalt zwischen dem Entkopplungselement und der Außenseite der Membranmantelwand gebildet ist. Der den Eintrittsbereich und/oder den Austrittsbereich ausbildende Ringspalt kann sich dabei insbesondere nur höchstens 180° um die Längsachse erstrecken. Das Leitelement ist somit besonders einfach gefertigt.

In einer Weiterbildung der Erfindung weist eine Außenseite der Membranmantelwand zumindest eine kanalförmige Vertiefung zum Leiten von Reinigungsflüssigkeit an die Vorderseite des Membranbodens auf. Die Außenseite der Membranmantelwand ist dabei der Seitenwand der Gehäuseeinrichtung zugewandt, wobei die kanalförmigen Vertiefungen beziehungsweise Rillen entlang der Längsachse des Ultraschallsensors an der Außenseite der Membranmantelwand bis zu dem Seitenrand des Membranbodens verlaufen. Die Reinigungsflüssigkeit kann also in den kanalförmigen Vertiefungen der Membranmantelwand zu dem Seitenrand des Membranbodens und schließlich zu der Vorderseite des Membranbodens fließen. Anders ausgedrückt kann die Reinigungsflüssigkeit in den kanalförmigen Vertiefungen in Senderichtung zu dem Seitenrand des Membranbodens fließen und über den Seitenrand an der Vorderseite des Membranbodens herab laufen. Die kanalförmigen Vertiefungen sind dabei insbesondere in einem Bereich der Membranmantelwand angeordnet, welcher sich um einen Winkel von höchstens 180°um die Längsachse des Ultraschal Isensors erstreckt. Diese Ausführungsform ist besonders vorteilhaft, wenn das Leitelement zumindest bereichsweise durch einen Spalt zwischen der Außenseite der Membranmantelwand und der Seitenwand der Gehäuseeinrichtung oder durch einen Spalt zwischen der Außenseite der Membranmantelwand und dem Entkopplungselement ausgebildet ist. Somit kann Reinigungsflüssigkeit besonders definiert an die Vorderseite des Membranbodens geleitet werden.

Eine Ausführungsform der Erfindung sieht vor, dass die Reinigungseinrichtung ein Verbindungselement aufweist, welches zumindest bereichsweise außerhalb der Gehäuseeinrichtung angeordnet ist und mit dem Eintrittsbereich gekoppelt ist, und welches mit einem kraftfahrzeuginternen, Reinigungsflüssigkeit bereitstellenden Reinigungssystem zum Leiten der Reinigungsflüssigkeit von dem Reinigungssystem zu dem Eintrittsbereich koppelbar ist. Das kraftfahrzeugseitige Reinigungssystem kann dabei ein Schlauchnetz umfassen, welches von einer Pumpe des kraftfahrzeugseitigen Reinigungssystems mit Reinigungsflüssigkeit versorgt wird und beispielsweise auch zum Reinigen von Scheinwerfern des Kraftfahrzeugs oder einer Frontscheibe des Kraftfahrzeugs verwendet werden kann. Dieses kraftfahrzeugseitige Reinigungssystem, kann über das Verbindungselement des Ultraschallsensors mit der Reinigungseinrichtung des Ultraschallsensors gekoppelt werden. Das Verbindungselement kann beispielsweise als ein Schlauchstutzen beziehungsweise als eine Tülle ausgestaltet sein, auf welche sich beispielsweise ein Schlauch des Schlauchnetzes aufstecken lässt. Der Schlauchstutzen kann beispielsweise an einer Außenseite der Gehäuserückseite angeordnet sein und dort mit der in der Gehäuserückseite angeordneten Eintrittsbereich gekoppelt sein. Es kann aber auch vorgesehen sein, dass der Schlauchstutzen an einer Außenseite der Seitenwand der Gehäuseeinrichtung angeordnet ist und mit der dort angeordneten Eintrittsbereich gekoppelt ist. Das Verbindungselement kann auch einteilig mit der Gehäuseeinrichtung ausgebildet sein. Somit kann auf einfache Weise die von dem Reinigungssystem bereitgestellte Reinigungsflüssigkeit dem Ultraschallsensor zum Reinigen der Vorderseite des Membranbodens zugeführt werden.

Es erweist sich als vorteilhaft, wenn die Reinigungseinrichtung ein Heizelement zum Heizen von zugeführter Reinigungsflüssigkeit aufweist. Dies ist besonders vorteilhaft, wenn sich bei kalten Temperaturen eine Eisschicht oder eine Schneeschicht als der Verschmutzungsbelag auf der Vorderseite des Membranbodens des Ultraschallsensors abgelagert hat. Durch das Heizen der Reinigungsflüssigkeit kann beim Reinigen der Vorderseite der Membran die Eisschicht oder die Schneeschicht aufgeschmolzen werden, sodass diese besonders leicht durch die Reinigungsflüssigkeit von der Vorderseite des Membranbodens abgetragen werden kann.

Die Erfindung betrifft außerdem ein Fahrerassistenzsystem mit zumindest einem erfindungsgemäßen Ultraschallsensor. Das Fahrerassistenzsystem kann beispielsweise als ein Parkassistenzsystem oder als ein Totwinkelassistent ausgestaltet sein.

Vorzugsweise weist das Fahrerassistenzsystem eine Erkennungseinrichtung zum Erkennen eines Verschmutzungsbelages auf, welche dazu ausgelegt ist, nach Erkennen eines Verschmutzungsbelages die Reinigungseinrichtung des Ultraschallsensors zum Reinigen der Vorderseite des Membranbodens anzusteuern. Die Erkennungseinrichtung kann zum Erkennen des Verschmutzungsbelages beispielsweise dazu ausgelegt sein, den Membranboden des Ultraschallsensors zum Schwingen anzuregen, und anhand eines Ausschwingverhaltens des Membranbodens, beispielsweise anhand einer Ausschwingdauer und/oder einer Ausschwingfrequenz des Membranbodens, das Vorhandensein des Verschmutzungsbelages erkennen. Sobald der Verschmutzungsbelag erkannt wurde, kann die Erkennungseinrichtung die Reinigungseinrichtung ansteuern, sodass diese beispielsweise die Reinigungsflüssigkeit zu der Vorderseite des Membranbodens leitet. Auch kann vorgesehen sein, dass die Erkennungseinrichtung einen Temperatursensor zum Erfassen einer Temperatur im Umgebungsbereich des Kraftfahrzeugs aufweist, mittels welchem der durch die Erkennungseinrichtung erfasste Verschmutzungsbelag charakterisiert werden kann. So kann beispielsweise vorgesehen sein, dass bei erfassten Temperaturen unterhalb des Gefrierpunktes der Verschmutzungsbelag als eine Schneeschicht oder eine Eisschicht erkannt wird. In Kombination mit der Temperaturerfassung kann die Erkennungseinrichtung beispielsweise bei Ablagerung von Schnee oder Eis auf der Vorderseite des Membranbodens das Heizelement des Ultraschallsensors ansteuern, um beim Reinigen der Vorderseite des Membranbodens die Reinigungsflüssigkeit zum Abtragen der Schneeschicht oder der Eisschicht zu heizen.

Alternativ oder zusätzlich kann die Reinigung des Ultraschallsensors immer dann ausgelöst werden, wenn beispielsweise auch eine Windschutzscheibe oder ein Scheinwerfer des Kraftfahrzeugs gereinigt werden. So kann einer Verschmutzung des Ultraschallsensors in vorteilhafter Weise vorgebeugt werden.

Eine Weiterbildung der Erfindung sieht vor, dass eine Steuereinrichtung des Fahrerassistenzsystems dazu ausgelegt ist, den Membranboden während der Reinigung durch die Reinigungseinrichtung zum Schwingen anzuregen. Gemäß dieser Ausführungsform wird der Ultraschallsensor also in einen Reinigungsmodus überführt, in welchem der Membranboden, beispielsweise durch ein mit dem Membranboden gekoppeltes Piezoelement, zum Schwingen angeregt wird. Durch dieses Schwingen kann der Verschmutzungsbelag beim Reinigen abgeschüttelt werden und somit die Vorderseite des Membranbodens auch von einem fest anhaftenden Verschmutzungsbelag befreit werden. Damit ist die Reinigung des Membranbodens besonders effizient gestaltet.

Die Erfindung betrifft außerdem ein Kraftfahrzeug mit einem Fahrerassistenzsystem. Das Kraftfahrzeug ist insbesondere als ein Personenkraftwagen ausgestaltet. Insbesondere weist das Kraftfahrzeug ein kraftfahrzeugseitiges Reinigungssystem auf, welches mit der Reinigungseinrichtung des zumindest einen Ultraschallsensors gekoppelt ist.

Die mit Bezug auf den erfindungsgemäßen Ultraschallsensor vorgestellten bevorzugten Ausführungsformen und deren Vorteile gelten entsprechend für das erfindungsgemäße Fahrerassistenzsystem sowie für das erfindungsgemäße Kraftfahrzeug.

Mit Angaben "oben", "unten", "vorne", "hinten", "außerhalb", "innerhalb", "Vorderseite" (16), "Rückseite" (17), "Längsachse" (15), "Senderichtung" (14), etc. sind bei bestimmungsgemäßem Gebrauch und bestimmungsgemäßem Anordnen des Ultraschallsensors am Kraftfahrzeug und einem dann in Richtung des Kraftfahrzeugs blickenden Beobachter gegebenen Positionen und Orientierungen angegeben.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen.

Dabei zeigen:
- Fig. 1: eine schematische Darstellung einer Ausführungsform eines erfindungsgemäßen Kraftfahrzeugs;
- Fig. 2: eine schematische Darstellung einer Ausführungsform eines erfindungsgemäßen Ultraschallsensors;
- Fig. 3: eine Explosivdarstellung der Ausführungsform des Ultraschallsensors gemäß Fig. 2;
- Fig. 4: eine schematische Darstellung einer weiteren Ausführungsform eines erfindungsgemäßen Ultraschallsensors; und
- Fig. 5: eine Frontansicht einer Ausführungsform eines Ultraschallsensors.

In den Figuren sind gleiche sowie funktionsgleiche Elemente mit den gleichen Bezugszeichen versehen.

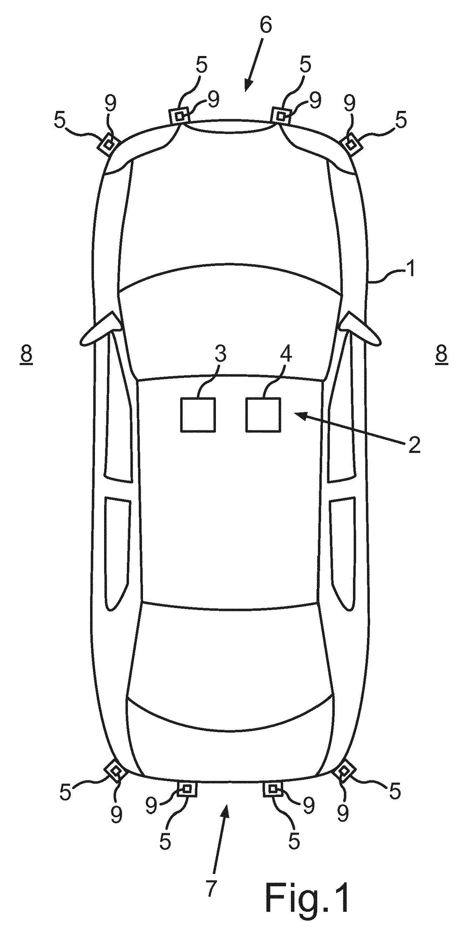

Fig. 1 zeigt ein Kraftfahrzeug 1 gemäß einer Ausführungsform der vorliegenden Erfindung. Das Kraftfahrzeug 1 ist im vorliegenden Fall als ein Personenkraftwagen ausgebildet. Das Kraftfahrzeug 1 weist ein Fahrerassistenzsystem 2 auf, welches eine Erfassungseinrichtung 3 sowie eine Steuereinrichtung 4 umfasst. Die Steuereinrichtung 4 kann beispielsweise als ein Steuergerät des Kraftfahrzeugs 1 ausgebildet sein. Darüber hinaus umfasst das Fahrerassistenzsystem 2 zumindest einen Ultraschallsensor 5.

Hier umfasst das Fahrerassistenzsystem 2 acht Ultraschallsensoren 5, von welchen vier Ultraschallsensoren 5 in einem Frontbereich 6 und vier weitere Ultraschallsensoren 5 in einem Heckbereich 7 des Kraftfahrzeugs 1 angeordnet sind. Die Ultraschallsensoren 5 sind insbesondere dazu ausgebildet, ein Objekt in einem Umgebungsbereich 8 des Kraftfahrzeugs 1 zu erfassen. Des Weiteren können die Ultraschallsensoren 5 dazu ausgelegt sein, einen Abstand des Kraftfahrzeugs 1 zu dem Objekt in dem Umgebungsbereich 8 des Kraftfahrzeugs 1 zu bestimmen. Dazu sind die Ultraschallsensoren 5 dazu ausgebildet, ein Ultraschallsignal auszusenden und das an dem Objekt in dem Umgebungsbereich 8 reflektierte Ultraschallsignal zu empfangen. Die Steuereinrichtung 4 des Fahrerassistenzsystems 2 ist dazu ausgelegt, die Ultraschallsensoren 5 anzusteuern.

Die Ultraschallsensoren 5 sind hier insbesondere so am Kraftfahrzeug 1 verbaut, beispielsweise in ein Außenverkleidungsteil des Kraftfahrzeugs 1 integriert, dass die Ultraschallsensoren 5 zumindest bereichsweise an den Umgebungsbereich 8 angrenzend angeordnet sind. Wenn die Ultraschallsensoren 5 nun durch einen Verschmutzungsbelag, beispielsweise eine Schneeschicht, eine Eisschicht oder eine Schmutzschicht, belegt sind, kann ein Senden und/oder Empfangen der Ultraschallsignale beeinträchtigt oder verhindert werden. Die Erfassungseinrichtung 3 des Fahrerassistenzsystems 2 ist insbesondere dazu ausgelegt, den Verschmutzungsbelag, beispielsweise die Schneeschicht oder die Schmutzschicht, auf den Ultraschallsensoren 5 zu erkennen. Auch kann die Erfassungseinrichtung 3 dazu ausgelegt sein, den Verschmutzungsbelag zu charakterisieren. Dazu kann die Erfassungseinrichtung 3 einen hier nicht dargestellten Temperatursensor zum Erfassen der Temperatur in dem Umgebungsbereich 8 aufweisen. Anhand der erfassten Temperatur kann beispielsweise eine Schneeschicht oder eine Eisschicht von einer Schmutzschicht unterschieden werden.

Zum Beseitigen des Verschmutzungsbelages weisen die Ultraschallsensoren 5 eine integrierte Reinigungseinrichtung 9 auf. Die Reinigungseinrichtung 9 ist dazu ausgelegt, den Ultraschallsensor 5 von dem Verschmutzungsbelag zu befreien. Die Reinigungseinrichtung 9 kann beispielsweise von der Erfassungseinrichtung 3 zum Reinigen des Ultraschallsensors 5 angesteuert werden, wenn von der Erfassungseinrichtung 3 das Vorhandensein eines Verschmutzungsbelages erfasst wurde. Das Kraftfahrzeug 1 kann ein hier nicht gezeigtes Reinigungssystem aufweisen, welches mit den Reinigungseinrichtungen 9 der Ultraschallsensoren 5 gekoppelt sein kann. Das fahrzeugseitige Reinigungssystem kann beispielsweise auch zum Reinigen von Scheinwerfern des Kraftfahrzeugs 1 und/oder zum Reinigen einer Windschutzscheibe des Kraftfahrzeugs 1 verwendet werden.

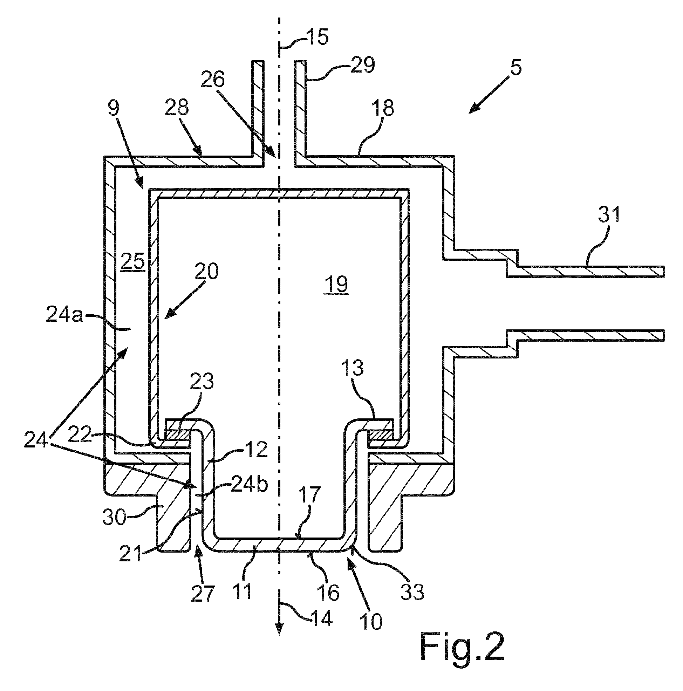

Fig. 2 zeigt eine Ausführungsform eines Ultraschallsensors 5 mit einer Reinigungseinrichtung 9 in einer Schnittansicht. Der Ultraschallsensor 5 weist hier eine topfförmige Membran 10 auf, welche einen Membranboden 11 sowie eine Membranmantelwand 12 umfasst. Der Membranboden 11 kann beispielsweise rund oder oval ausgebildet sein. Die Membranmantelwand 12, welche umlaufend um den Membranboden 11 angeordnet ist, umfasst einen Membrankragen 13. Über den Membranboden 11 können entlang einer Senderichtung 14, welche entlang einer Längsachse 15 des Ultraschallsensors 5 verläuft, Ultraschallsignale ausgesendet und/oder empfangen werden. Der Membranboden 11 weist eine Vorderseite 16 auf, welche in einer bestimmungsgemäßen Einbaulage des Ultraschallsensors 5 am Kraftfahrzeug 1, beispielsweise in einem Stoßfänger des Kraftfahrzeugs 1, dem Umgebungsbereich 8 zugewandt ist beziehungsweise angrenzend an den Umgebungsbereich 8 ausgebildet ist. Der Vorderseite 16 gegenüberliegend weist der Membranboden 11 eine Rückseite 17 auf. Auf der Rückseite 17 des Membranbodens 11 kann ein hier nicht gezeigtes Piezoelement zur Schwingungsanregung des Membranbodens 11 angeordnet sein.

Außerdem weist der Ultraschallsensor 5 ein Gehäuse beziehungsweise eine Gehäuseeinrichtung 18 auf, welche zum Aufnehmen der Membran 10 dient. Die Membran 10 ist also zumindest bereichsweise in einem Innenraum beziehungsweise einem Gehäuseinneren 19 der Gehäuseeinrichtung 18 angeordnet. Unter dem Gehäuseinneren 19 der Gehäuseeinrichtung 18 ist hier ein Bereich zu verstehen, welcher von dem Umgebungsbereich 8 abgegrenzt beziehungsweise separiert ist. Die Gehäuseeinrichtung 18 weist eine Seitenwand 20 auf, welche umlaufend um die Längsachse 15 des Ultraschallsensors 5 angeordnet ist und in einem vorderen Bereich der Gehäuseeinrichtung 18 zumindest bereichsweise mit einer Außenseite 21 der Membranmantelwand 12 überlappt. Die Seitenwand 20 der Gehäuseeinrichtung 18 weist dabei hier eine Stufe 22 auf, auf welcher der Membrankragen 13 zum Halten der Membran 10 angeordnet werden kann. Zwischen dem Membrankragen 13 und der Stufe 22 kann ein Entkopplungselement 23 angeordnet sein, welches die Membran 10 und die Gehäuseeinrichtung 18 schwingungsentkoppelt.

Der Ultraschallsensor 5 weist die Reinigungseinrichtung 9 auf, welche zum Reinigen der Vorderseite 16 des Membranbodens 11 dient und welche zumindest teilweise in dem Gehäuseinneren 19 angeordnet ist. Dazu kann die Reinigungseinrichtung 9 zumindest ein Leitelement 24 aufweisen, welches hier in einem ersten Bereich 24a des Leitelementes 24 in Form von einer doppelwandigen Gehäusewand 20 ausgebildet ist. Das Leitelement 24 ist zum Leiten einer Reinigungsflüssigkeit beziehungsweise eines Waschmediums zu der Vorderseite 16 des Membranbodens 11 zum Reinigen der Vorderseite 16 ausgebildet. In einem Zwischenraum 25 der doppelwandigen Seitenwände 20 kann die Reinigungsflüssigkeit entlang der Längsachse 15 des Ultraschallsensors 5 fließen. Das zumindest eine Leitelement 24 kann aber auch als ein Schlauch oder als ein Kanal ausgebildet sein, welcher in dem Gehäuseinneren 19, beispielsweise entlang der Seitenwand 20 verlaufend, angeordnet ist. Durch das Leiten der Reinigungsflüssigkeit innerhalb des Leitelementes 24, also hier innerhalb der doppelwandigen Seitenwand 20, kann verhindert werden, dass eine hier nicht gezeigte Elektronik des Ultraschallsensors 5, welche im Gehäuseinneren 19 der Gehäuseeinrichtung 18 angeordnet sein kann, beschädigt wird. Die Elektronik kann beispielsweise über Anschlusselemente elektrisch mit der Steuereinrichtung 4 des Fahrerassistenzsystems 2 verbunden werden, welche in einem Anschlussschacht 31 der Gehäuseeinrichtung 18 angeordnet sein können.

Außerdem weist die Reinigungseinrichtung 9 einen Eintrittsbereich 26 und einen Austrittsbereich 27 auf, wobei das zumindest eine Leitelement 24 zum Leiten der Reinigungsflüssigkeit von dem Eintrittsbereich 26 zu dem Austrittsbereich 27 mit dem Eintrittsbereich 26 und dem Austrittsbereich 27 gekoppelt ist. Die Reinigungsflüssigkeit, welche beispielsweise von dem kraftfahrzeuginternen Reinigungssystem bereitgestellt wird, kann somit über den Eintrittsbereich 26 und das Leitelement 24 zu dem Austrittsbereich 27 fließen. Der Eintrittsbereich 26 ist hier als eine Öffnung beziehungsweise ein Loch in einer Gehäuserückseite 28 der Gehäuseeinrichtung 18 ausgebildet. Die Reinigungseinrichtung 9 kann ein Verbindungselement 29 umfassen, welches beispielsweise einteilig mit der Gehäuseeinrichtung 18 ausgebildet sein kann. Das Verbindungselement 29 kann beispielsweise als eine Tülle oder als ein Schlauchstutzen ausgebildet sein, auf welchen ein Schlauch des kraftfahrzeuginternen Reinigungssystems aufgesteckt werden kann. Über dieses Verbindungselement 29 kann dem Leitelement 24 die Reinigungsflüssigkeit zugeführt werden.

Der Ultraschallsensor 5 kann auch ein Entkopplungselement 30 aufweisen, welches in einer bestimmungsgemäßen Einbaulage des Ultraschallsensors 5 an dem Außenverkleidungsteil des Kraftfahrzeugs 1 den Ultraschallsensor 5 in dem Außenverkleidungsteil zentriert und die Membran 10 von dem Außenverkleidungsteil schwingungsentkoppelt. Das Entkopplungselement 30 kann als ein Entkopplungsring, insbesondere als ein Gummiring, ausgebildet sein. Das Leitelement 24 ist hier in einem zweiten Bereich 24b des Leitelementes 24 als ein Spalt zwischen dem Entkopplungselement 30 und der Außenseite 21 der Membranmantelwand 12 ausgebildet. Der Austrittsbereich 27 ist hier als eine spaltförmige Öffnung zwischen einem Seitenrand 33 des Membranbodens 11 und dem Entkopplungselement 30 ausgebildet. Die Reinigungsflüssigkeit wird also über das Verbindungselement 29 dem Eintrittsbereich 26 zugeführt, tritt in den Zwischenraum 25 der doppelwandigen Seitenwand 20 der Gehäuseeinrichtung 18 ein, fließt durch den Zwischenraum 25 hindurch in Senderichtung 14 von der Gehäuserückseite 28 zu der Membran 10, an der Außenseite 21 der Membranmantelwand 12 zu dem Austrittsbereich 27 und tritt über den Austrittsbereich 27 an der Vorderseite 16 des Membranbodens 11 aus. Beim Austreten aus dem Austrittsbereich 27 läuft die Reinigungsflüssigkeit von dem Seitenrand 33 aus über die Vorderseite 16 des Membranbodens 11 und trägt dabei den Verschmutzungsbelag von der Vorderseite 16 des Membranbodens 11 ab. Zum Leiten der Reinigungsflüssigkeit kann die Außenseite 21 der Membranmantelwand 12 beispielsweise hier nicht gezeigte kanalförmige Vertiefungen beziehungsweise Rillen aufweisen, welche entlang der Längsachse 15 bis zu dem Seitenrand 33 des Membranbodens 11 verlaufen.

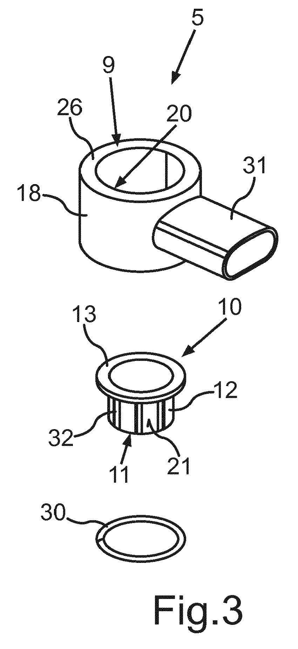

Fig. 3 zeigt eine Explosivdarstellung der Ausführungsform des Ultraschallsensors 5 gemäß Fig. 2. Hierbei sind die kanalförmigen beziehungsweise rillenförmigen Vertiefungen 32 in der Außenseite 21 der Membranmantelwand 12 zu erkennen. Auch kann es vorgesehen sein, dass die Gehäuseeinrichtung 18 einen hier nicht gezeigten Gehäusedeckel aufweist, welcher beispielsweise das Entkopplungselement 30 umfassen kann.

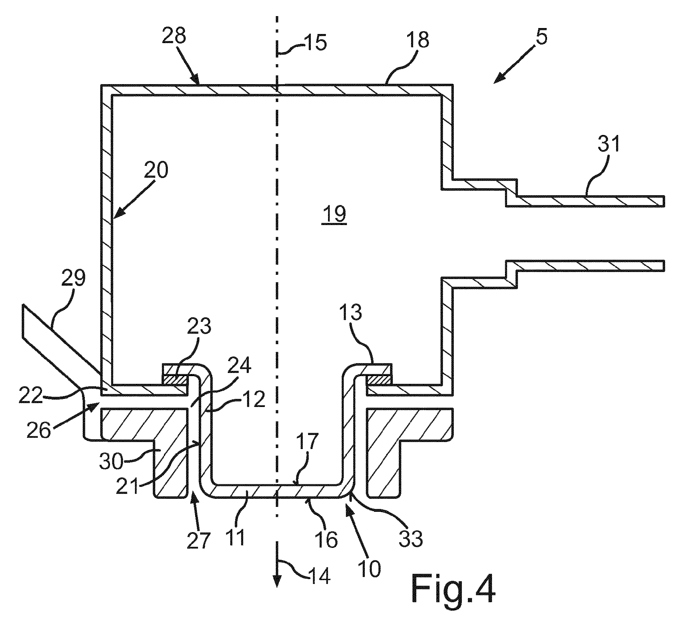

Fig. 4 zeigt eine weitere Ausführungsform eines erfindungsgemäßen Ultraschallsensors 5. Hier ist die Seitenwand 20 der Gehäuseeinrichtung 18 als eine einfache, einwandige Seitenwand ausgebildet. Der Eintrittsbereich 26 ist hier als eine Öffnung in der Gehäuseeinrichtung 18 in einem Bereich der Gehäuseeinrichtung 18 ausgebildet, welcher zumindest bereichsweise mit der Außenseite 21 der Membranmantelwand 12 überlappt. Insbesondere ist der Eintrittsbereich 26 hier zwischen der Stufe 22 und dem Entkopplungselement 30 vorgesehen. Außerdem ist das Verbindungselement 29, welches wiederum als ein Schlauchstutzen ausgebildet sein kann, an dem Eintrittsbereich 26 angeordnet beziehungsweise mit dem Eintrittsbereich 26 gekoppelt. Die Reinigungsflüssigkeit, welche über das Verbindungselement 29 dem Eintrittsbereich 26 zugeführt wird, fließt nun nicht mehr durch das Gehäuseinnere 19, sondern wird direkt an die Membranmantelwand 12 geleitet und fließt über das durch die Außenseite 21 der Membranmantelwand 12 und das Entkopplungselement 30 gebildete Leitelement 24 zu dem Austrittsbereich 27 an der Vorderseite 16 des Membranbodens 11. Die Außenseite 21 der Membranmantelwand 12 kann wiederum die in Fig. 3 gezeigten kanalförmigen Vertiefungen 32 aufweisen, welche zum Leiten der Reinigungsflüssigkeit entlang der Membranmantelwand 12 ausgelegt sind.

Auch kann vorgesehen sein, dass die Reinigungseinrichtung 9 der in den Fig. 2 und 4 gezeigten Ausführungsformen des Ultraschallsensors 5 ein hier nicht gezeigtes Heizelement aufweist, welches dazu ausgelegt ist, die Reinigungsflüssigkeit zu heizen. Dies ist besonders vorteilhaft, wenn der Verschmutzungsbelag in Form von einer Schneeschicht oder einer Eisschicht an der Vorderseite 16 des Membranbodens 11 haftet. Dies kann beispielsweise von der Erkennungseinrichtung 3 (siehe Fig. 1) erkannt werden. Zum Charakterisieren des Verschmutzungsbelages kann die Erkennungseinrichtung 3 die Membran 10 zum Schwingen anregen und anhand des Schwingungsveraltens der Membran 10 den Verschmutzungsbelag zunächst erkennen. In Kombination mit der Temperaturerfassung kann die Erkennungseinrichtung 3 bestimmen, ob es sich bei dem Verschmutzungsbelag um Schmutz oder Schnee beziehungsweise Eis handelt. Bei einem Verschmutzungsbelag in Form von Schnee oder Eis kann die Reinigungsflüssigkeit beim Reinigen der Vorderseite 16 des Membranbodens 11 von dem Heizelement geheizt werden und somit die Eisschicht oder die Schneeschicht schmelzen.

Auch kann vorgesehen sein, dass die Steuereinrichtung 4 des Kraftfahrzeugs 1 (siehe Fig. 1) den Membranboden 11 während des Reinigens zum Schwingen anregt, also den Ultraschallsensor 5 in einen Reinigungsmodus überführt, sodass dieser den Verschmutzungsbelag beim Reinigen abschüttelt.

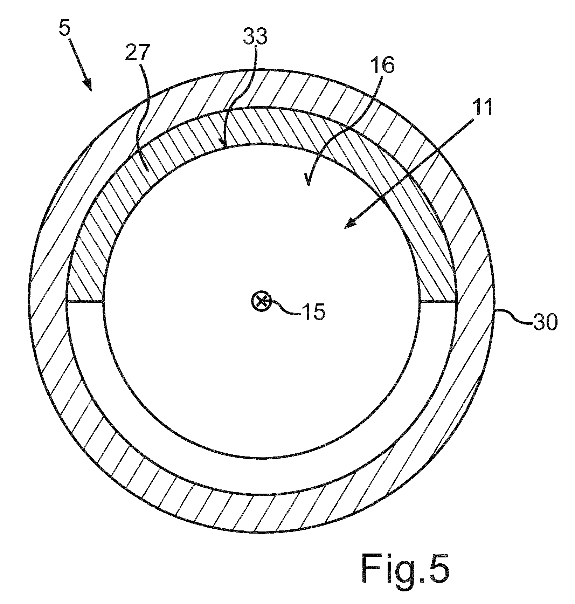

Fig. 5 zeigt eine Frontansicht einer Ausführungsform des Ultraschallsensors 5. Dabei ist zu erkennen, dass sich der Austrittsbereich 27 nur in einem Winkel von höchstens 180° entlang des Seitenrandes 33 des Membranbodens 11 erstreckt. In einer bestimmungsgemäßen Einbaulage des Ultraschallsensors 5 am Kraftfahrzeug 1 erstreckt sich der Austrittsbereich 27 oberhalb der Vorderseite 16 des Membranbodens 11, also an einem oberen Seitenrand 33 des Membranbodens 11. Wenn also Reinigungsflüssigkeit aus dem Austrittsbereich 27 austritt, so läuft diese über die Vorderseite 16 des Membranbodens 11 nach unten, also in Richtung einer Fahrbahn des Kraftfahrzeugs 1, und trägt den Verschmutzungsbelag von der Vorderseite 16 des Membranbodens 11 ab.

## Patentansprüche

1. Ultraschallsensor (5) für ein Kraftfahrzeug (1) mit einer Membran (10) aufweisend einen Membranboden (11) und eine Membranmantelwand (12), wobei der Membranboden (10) eine in eine Ultraschallsignale aussendende Senderichtung (14) des Ultraschallsensors (5) weisende Vorderseite (16) und eine der Vorderseite (16) gegenüberliegende Rückseite (17) aufweist,
**dadurch gekennzeichnet, dass**
der Ultraschallsensor (5) eine Reinigungseinrichtung (9) zum Reinigen der Vorderseite (16) des Membranbodens (11) aufweist.

2. Ultraschallsensor (5) nach Anspruch 1,
**dadurch gekennzeichnet, dass**
der Ultraschallsensor (5) eine Gehäuseeinrichtung (18) zum Aufnehmen der Membran (10) aufweist, wobei die Reinigungseinrichtung (9) zumindest bereichsweise innerhalb der Gehäuseeinrichtung (18) angeordnet ist.

3. Ultraschallsensor (5) nach Anspruch 2,
**dadurch gekennzeichnet, dass**
die Reinigungseinrichtung einen Eintrittsbereich (26), einen Austrittsbereich (27) und zumindest ein Leitelement (24) zum Leiten von Reinigungsflüssigkeit von dem Eintrittsbereich (26) zu dem Austrittsbereich (27) aufweist, wobei die Reinigungseinrichtung zumindest bereichsweise in die Gehäuseeinrichtung (18) integriert ist.

4. Ultraschallsensor (5) nach Anspruch 3,
**dadurch gekennzeichnet, dass**
der Eintrittsbereich (26) als eine Öffnung in einer der Rückseite (17) des Membranbodens (11) zugewandten Gehäuserückseite (28) und/oder in einem zumindest bereichsweise mit der Membranmantelwand (12) überlappenden Bereich einer Seitenwand (20) der Gehäuseeinrichtung (18) ausgebildet ist.

5. Ultraschallsensor (5) nach Anspruch 3 oder 4,
**dadurch gekennzeichnet, dass**
der Austrittsbereich (27) angrenzend an einen, um eine Längsachse (15) des Ultraschallsensors (5) verlaufenden Seitenrand (33) des Membranbodens (11) ausgebildet ist, wobei sich der Austrittsbereich (27) insbesondere höchstens über einen Winkel von 180°entlang des Seitenrandes (33) erstreckt.

6. Ultraschallsensor (5) nach einem der Ansprüche 3 bis 5,
**dadurch gekennzeichnet, dass**
der Ultraschallsensor (5) ein ringförmiges, an die Membranmantelwand (12) angrenzendes Entkopplungselement (30) aufweist, wobei das Leitelement (24) zumindest bereichsweise als ein Spalt zwischen dem Entkopplungselement und einer Außenseite (21) der Membranmantelwand (12) ausgebildet ist und der Austrittsbereich (27) als eine Öffnung zwischen dem Entkopplungselement (30) und einem, um eine Längsachse (15) des Ultraschallsensors (5) verlaufenden Seitenrand (33) des Membranbodens (11) ausgebildet ist.

7. Ultraschallsensor (5) nach einem der Ansprüche 3 bis 6,
**dadurch gekennzeichnet, dass**
das zumindest eine Leitelement (24) zumindest bereichsweise einteilig mit der Gehäuseeinrichtung (18) ausgebildet ist.

8. Ultraschallsensor (5) nach Anspruch 7,
**dadurch gekennzeichnet, dass**
eine entlang einer Längsachse (15) des Ultraschallsensors (5) verlaufende Seitenwand (20) der Gehäuseeinrichtung (18) zum Ausbilden des zumindest einen Leitelements (24) zumindest bereichsweise doppelwandig ausgebildet ist.

9. Ultraschallsensor (5) nach einem der Ansprüche 3 bis 8,
**dadurch gekennzeichnet, dass**
die Reinigungseinrichtung (9) ein Verbindungselement (29) aufweist, welches zumindest bereichsweise außerhalb der Gehäuseeinrichtung (18) angeordnet ist und mit dem Eintrittsbereich (26) gekoppelt ist, und welches mit einem kraftfahrzeuginternen, Reinigungsflüssigkeit bereitstellenden Reinigungssystem zum Leiten der Reinigungsflüssigkeit von dem Reinigungssystem zu dem Eintrittsbereich (26) koppelbar ist.

10. Ultraschallsensor (5) nach einem der vorhergehenden Ansprüche,
**dadurch gekennzeichnet, dass**
eine Außenseite (21) der Membranmantelwand (12) zumindest eine kanalförmige Vertiefung (32) zum Leiten von Reinigungsflüssigkeit an die Vorderseite (16) des Membranbodens (11) aufweist.

11. Ultraschallsensor (5) nach einem der vorhergehenden Ansprüche,
**dadurch gekennzeichnet, dass**
die Reinigungseinrichtung (9) ein Heizelement zum Heizen von zugeführter Reinigungsflüssigkeit aufweist.

12. Fahrerassistenzsystem (2) mit zumindest einem Ultraschallsensor (5) nach einem der vorhergehenden Ansprüche.

13. Fahrerassistenzsystem (2) nach Anspruch 12,
**dadurch gekennzeichnet, dass**
das Fahrerassistenzsystem (2) eine Erkennungseinrichtung (3) zum Erkennen eines Verschmutzungsbelages aufweist, welche dazu ausgelegt ist, nach Erkennen des Verschmutzungsbelages die Reinigungseinrichtung (9) des Ultraschallsensors (5) zum Reinigen der Vorderseite (16) des Membranbodens (11) anzusteuern.

14. Fahrerassistenzsystem (2) nach Anspruch 12 oder 13,
**dadurch gekennzeichnet, dass**
eine Steuereinrichtung (4) des Fahrerassistenzsystems (2) dazu ausgelegt ist, den Membranboden (11) während der Reinigung durch die Reinigungseinrichtung (9) zum Schwingen anzuregen.

15. Kraftfahrzeug (1) mit einem Fahrerassistenzsystem (2) nach einem Ansprüche 12 bis 14.
